(19) Europäisches Patentamt
European Patent Office
Office européen des brevets

(11) **EP 4 290 607 A1**

(12) **EUROPEAN PATENT APPLICATION**
published in accordance with Art. 153(4) EPC

(43) Date of publication:
**13.12.2023 Bulletin 2023/50**

(21) Application number: **21924859.8**

(22) Date of filing: **21.12.2021**

(51) International Patent Classification (IPC):
$H01M\ 4/136^{(2010.01)}$     $H01M\ 4/1397^{(2010.01)}$
$H01M\ 4/36^{(2006.01)}$      $H01M\ 4/38^{(2006.01)}$
$H01M\ 4/48^{(2010.01)}$      $H01M\ 4/58^{(2010.01)}$
$H01M\ 4/66^{(2006.01)}$

(52) Cooperative Patent Classification (CPC):
H01M 4/136; H01M 4/1397; H01M 4/36;
H01M 4/38; H01M 4/48; H01M 4/58; H01M 4/66;
Y02E 60/10

(86) International application number:
**PCT/JP2021/047263**

(87) International publication number:
**WO 2022/168474 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2021 JP 2021016947**

(71) Applicant: **SHIN-ETSU CHEMICAL CO., LTD.**
**Tokyo 1000005 (JP)**

(72) Inventors:
• **HIROSE, Takakazu**
  **Annaka-shi, Gunma 379-0125 (JP)**
• **MATSUNO, Takumi**
  **Annaka-shi, Gunma 379-0125 (JP)**
• **OSAWA, Yusuke**
  **Annaka-shi, Gunma 379-0125 (JP)**
• **SAKAI, Reiko**
  **Annaka-shi, Gunma 379-0125 (JP)**
• **KOIDE, Hiroyuki**
  **Annaka-shi, Gunma 379-0125 (JP)**

(74) Representative: **Mooser, Sebastian Thomas**
**Wuesthoff & Wuesthoff**
**Patentanwälte PartG mbB**
**Schweigerstraße 2**
**81541 München (DE)**

(54) **NEGATIVE ELECTRODE AND METHOD FOR PRODUCING NEGATIVE ELECTRODE**

(57)     The present invention is a negative electrode including: a negative electrode current collector with a roughened surface; and a negative electrode active material layer provided on the negative electrode current collector. The negative electrode active material layer includes: negative electrode active material particles containing a compound of lithium, silicon, and oxygen; and a composite compound filled in interparticle gaps and a surface layer of the negative electrode active material particles, the composite compound at least containing chemically bonded carbon and oxygen atoms, the composite compound not being alloyed with the negative electrode active material particles. A ratio O/Si of the oxygen to the silicon constituting the negative electrode active material particles is in the range of 0.8 or more and 1.2 or less. This can provide a negative electrode that can significantly increase a capacity while maintaining battery characteristics.

[FIG. 2]

5.0 kV × 5.00K 6.00μm

EP 4 290 607 A1

**Description**

TECHNICAL FIELD

The present invention relates to a negative electrode and a negative electrode manufacturing method.

BACKGROUND ART

In recent years, small electronic devices, typically mobile devices, have become widespread and are being strongly required to further reduce their size and weight and increase their service life. In order to address such market needs, in particular, development of secondary batteries that are small and lightweight and yet can provide a high energy density is being progressed. These secondary batteries are contemplated to find application not only in small electronic devices but also in large electronic devices, typically automobiles, as well as power storage systems as typified by houses.

In particularly, lithium-ion secondary batteries hold great promise because it is easy to make them smaller and increase their capacity and because they also have a higher energy density than that of lead or nickel-cadmium batteries.

The above lithium-ion secondary battery includes positive and negative electrodes, a separator, and an electrolyte. The negative electrode contains a negative electrode active material involved in charging and discharging reactions.

While carbon-based active materials are widely used as the negative electrode active material, recent market needs have called for further improvement in the battery capacity. The use of silicon as a negative electrode active material has been contemplated to improve the battery capacity. This is because silicon has a theoretical capacity (4199 mAh/g) that is more than ten times greater than that of graphite (372 mAh/g) and is thus anticipated to significantly improve the battery capacity. The development of silicon materials for use as negative electrode active materials under contemplation not only includes a simple substance of silicon but also their alloys as well as their compounds as typified by oxides. The active material shapes under contemplation for carbon-based active materials range from a standard application type to an integrated type, in which the material is directly deposited on a current collector.

The use of silicon as a main material of a negative electrode active material, however, expands or shrinks the negative electrode active material during charging and discharging, making the negative electrode active material prone to cracking particularly near its surface layer. In addition, ionic substances are generated inside the active material, which renders this negative electrode active material cracking-prone. Any cracking of the surface layer of the negative electrode active material will create a new surface, increasing the reaction area of the active material. A decomposition reaction of an electrolyte occurs on this new surface, and the new surface is coated with a decomposition product of the electrolyte, so that the electrolyte is consumed. This often leads to degradation in cycle characteristics.

Various investigations into lithium-ion secondary battery negative electrode materials and electrode configurations employing a silicon material as a main material have been made in order to improve the initial battery efficiency and cycle characteristics.

Specifically, a vapor deposition method is used to simultaneously deposit silicon and amorphous silicon dioxide in order to provide good cycle characteristics and high safety (see e.g., Patent Document 1). Also, a carbon material (electronic conductor) is disposed on a surface of silicon oxide particles in order to provide a high battery capacity and high safety (see e.g., Patent Document 2). Further, in order to improve cycle characteristics and provide higher input/output characteristics, an active material containing silicon and oxygen is produced and an active material layer with a higher ratio of oxygen near a current collector is formed (see e.g., Patent Document 3). Further, in order to improve cycle characteristics, a silicon active material is formed such that it contains oxygen at an average oxygen content of 40 at% or less, with a higher oxygen content near a current collector (see e.g., Patent Document 4).

Further, a nanocomposite containing Si-phase, $SiO_2$, and MyO metal oxide is used to improve the initial charge-and-discharge efficiency (see e.g., Patent Document 5). Further, $SiO_x$ ($0.8 \leq x \leq 1.5$; the range of particle size: 1 um to 50 um) and a carbon material are mixed and fired at a high temperature to improve cycle characteristics (see e.g., Patent Document 6). Further, in order to improve cycle characteristics, an active material is controlled to have an oxygen-to-silicon molar ratio in the negative electrode active material within the range of 0.1 to 1.2 such that a difference between the maximum and minimum molar ratios near the interface between the active material and a current collector is 0.4 or less (see e.g., Patent Document 7). Further, lithium-containing metal oxide is used to improve battery load characteristics (see e.g., Patent Document 8). Further, a hydrophobic layer such as one made of a silane compound is formed on the surface of a silicon material to improve cycle characteristics (see e.g., Patent Document 9). Further, silicon oxide is used and a graphite coating is formed on its surface layer to provide electric conductivity for improved cycle characteristics (see e.g., Patent Document 10). In Patent Document 10, a Raman spectrum of the graphite coating exhibits broad peaks at shift values of 1330 $cm^{-1}$ and 1580 $cm^{-1}$, and their intensity ratio $I_{1330}/I_{1580}$ satisfies $1.5 < I_{1330}/I_{1580} < 3$. Further, particles having a silicon microcrystal phase dispersed in silicon dioxide are used to provide a high battery capacity and improved cycle characteristics (see e.g., Patent Document 11). Further, silicon oxide with a controlled silicon-to-oxygen atomic ratio of 1 : y (0 < y < 2) is used to improve overcharge-and-overdischarge characteristics (see e.g., Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with $Si^{0+}$ to $Si^{4+}$, which has various oxidation states (see Non Patent Document 2). Kapaklis proposes a disproportionation structure that is to be separated into Si and $SiO_2$ by applying thermal load to silicon oxide (see Non Patent Document 3). Miyachi et al. pay attention to Si and $SiO_2$, which contribute to charge and discharge, among the silicon oxide having the disproportionation structure (see Non Patent Document 4), and Yamada et al. propose a formula of a reaction between the silicon oxide and Li as follows (see Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

The above reaction formula indicates that Si and $SiO_2$ constituting silicon oxide react with Li to be separated into a Li silicide and a Li silicate, and partially unreacted $SiO_2$.

Here, the generated Li silicate, which is irreversible component, is considered to be a stable substance not leasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge and discharge of silicon oxide, as $Li_4SiO_4$ by using $^7$Li-MAS-NMR and $^{29}$Si-MAS-NMR (see Non Patent Document 6).

This irreversible capacity is the weakest point of silicon oxide, and improvement is required. Accordingly, Kim et al. produce a negative electrode having remarkably improved initial efficiency as a battery and being practically usable by using a Li pre-doping method to form the Li silicate in advance (see Non Patent Document 7).

There was also proposed a method of treating a powder, not Li-doping the electrode, to achieve the improvement of the irreversible capacity (see Patent Document 13).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765A
Patent Document 13: JP 2015-156355A

NON PATENT LITERATURE

Non Patent Document 1: Battery Association of Japan, Newsletter "Denchi (battery)", May 1, 2010, p. 10
Non Patent Literature 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Literature 3: V. Kapaklis, J. Non-Crystalline Solids, 354 (2008) 612
Non Patent Literature 4: Mariko Miyachi, Hironori Yamamoto, and Hidemasa Kawai, J. Electrochem. Soc. 2007 volume 154, issue 4, A376-A380
Non Patent Literature 5: M. Yamada, M. Inaba, A. Ueda, K. Matsumoto, T. Iwasaki, T. Ohzuku, J. Electrochem. Soc., 159, A1630 (2012)

Non Patent Literature 6: Taeahn Kim, Sangjin Park, and Seung M. Oh, J. Electrochem. Soc. volume 154,(2007), A1112-A1117.

Non Patent Literature 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

Non Patent Document 8: Noboru Sato (ed.) "The Latest Development Trends on Lithium-ion Batteries for xEV", CMC Publishing, November 27, 2020, pp. 96-111.

SUMMARY OF INVENTION

TECHNICAL PROBLEM

As described above, in recent years, improvement of performance and higher functionalization of small electronic devices, typically mobile devices, are in progress , and lithium-ion secondary batteries, which are a main power supply therefor, are required to increase their battery capacity. Desired as one solution for this problem is development of a lithium-ion secondary battery having a negative electrode using a silicon material as a main material. Such lithium-ion secondary batteries using a silicon material are desired to have initial charge-and-discharge characteristics and cycle characteristics that are almost equivalent to those of lithium-ion secondary batteries using a carbon-based active material. Hence, the cycle characteristics and initial charge-and-discharge characteristics have been improved by using, as a negative electrode active material, silicon oxide modified by insertion and partial elimination of Li. More recently, the irreversible capacity, which is a disadvantage of silicon oxide, has been reduced by pre-incorporating Li in the silicon oxide as the main material and thereby generating Li silicate, and launch of such batteries have actually been started. A prototype battery fabricated by completely replacing a carbon negative electrode material with this silicon oxide incorporating Li, or Li-SiO-C (Non Patent Document 8), achieves a capacity increase of only in the upper 20 percent range over batteries using a carbon negative electrode material. This means that, given improved performance of small electronic devices (5G etc.) and improved driving range of electric vehicles, further improvement in the battery capacity is required.

The present invention has been made in view of the above problems. An object of the present invention is to provide a negative electrode that can significantly increase the capacity while maintaining battery characteristics as well as a negative electrode manufacturing method for manufacturing such a negative electrode.

SOLUTION TO PROBLEM

To solve the above problems, the present invention provides a negative electrode comprising:

> a negative electrode current collector with a roughened surface; and
> a negative electrode active material layer provided on the negative electrode current collector,
> wherein the negative electrode active material layer includes:
>
>> negative electrode active material particles containing a compound of lithium, silicon, and oxygen; and
>> a composite compound filled in interparticle gaps and a surface layer of the negative electrode active material particles, the composite compound at least containing chemically bonded carbon and oxygen atoms, the composite compound not being alloyed with the negative electrode active material particles, and
>
> a ratio O/Si of the oxygen to the silicon constituting the negative electrode active material particles is in a range of 0.8 or more and 1.2 or less.

The inventive negative electrode has a negative electrode active material layer including negative electrode active material particles containing a compound of lithium, silicon, and oxygen, which can improve the battery capacity. In addition, the inventive negative electrode can have the negative electrode active material layer directly held on the roughened surface of the current collector without the use of binders and conductive agents. This can reduce the area that is not involved in charging and discharging in the electrode and can also reduce excess voids, significantly improving the energy density of the electrode.

In addition, a composite compound that at least contains chemically bonded carbon and oxygen atoms and does not alloy with the negative electrode active material particles is filled in interparticle gaps and a surface layer of the negative electrode active material particles. This composite compound serves as a protective layer that protects the interface between the negative electrode active material layer and the electrolyte. The presence of such a composite compound enables the inventive negative electrode to exhibit excellent cycle characteristics.

Further, the inventive negative electrode has a ratio O/Si of oxygen to silicon constituting the negative electrode active material particles that is in the range of 0.8 or more and 1.2 or less, which enables the inventive negative electrode to maintain excellent battery characteristics.

That is, the inventive negative electrode can significantly increase the capacity while maintaining battery characteristics.

The composite compound may be a ring-opening decomposition product of a composite of an ether-based solvent and a polyphenylene compound or a polycyclic aromatic compound, or a ring-opening decomposition product of the composite complexed with lithium.

Such a composite compound can be easily formed during doping the negative electrode active material particles with Li, depending on the Li-doping technique used.

The composite compound preferably contains lithium at least as part thereof.

Compounding composite oxide with lithium to incorporate lithium therein can improve the diffusivity of Li in particular, which can further improve battery characteristics.

In the negative electrode, the silicon present at a boundary between the composite compound and the negative electrode active material particles is preferably in a compound state of $Si^{1+}$ to $Si^{3+}$.

Such a negative electrode can facilitate smoother Li insertion.

The negative electrode active material layer preferably has a multilayer structure of two or more layers, and a gap between the layers is preferably filled with the composite compound.

Such a negative electrode allows for smooth insertion of Li while inhibiting decomposition of the electrolyte, and can exhibit more excellent battery characteristics.

The composite compound can have a plurality of bonding states with different C1s bonding energies as analyzed by photoelectron spectroscopy.

As such, the composite compound may have a plurality of bonding states with different bonding energies.

The negative electrode active material particles after at least twenty charge-and-discharge cycles preferably include silicon in an $Si^{0+}$ state and silicon in a compound state of $Si^{1+}$ to $Si^{3+}$.

Such a negative electrode allows for smoother charging and discharging.

When the negative electrode active material particles are defined as primary particles, the negative electrode active material layer after charging and discharging preferably forms secondary particles that are an aggregate of the primary particles, and the secondary particles are preferably in the form of being separated from each other in an in-plane direction.

Such a negative electrode can more effectively prevent electrode disintegration due to charging and discharging, and maintain a stable negative electrode active material layer.

The negative electrode active material particles before charging and discharging preferably have a peak originating from an Si (111) crystal plane obtained by X-ray diffraction using Cu-K$\alpha$ rays, and a size of crystallites corresponding to the crystal plane is preferably 1.0 nm or less.

Such a negative electrode can inhibit reactivity with the electrolyte, and further improve battery characteristics.

The negative electrode current collector preferably has a ten-point average roughness Rz of 1.5 um or more and 5.0 um or less on the surface.

The negative electrode with such a negative electrode current collector can not only hold the negative electrode active material layer in a stable manner but also ensure an appropriate density of the negative electrode active material particles in the negative electrode active material layer, and, as a result, can exhibit more excellent battery characteristics.

In another aspect, the present invention provides a negative electrode manufacturing method for manufacturing the inventive negative electrode, comprising steps of:

vapor-depositing a negative electrode active material layer containing silicon oxide on the negative electrode current collector; and
immersing the negative electrode active material layer in a solution containing lithium to modify the silicon oxide into the compound of lithium, silicon, and oxygen by redox method and form the composite compound.

The inventive negative electrode manufacturing method can manufacture a negative electrode that can significantly increase the capacity while maintaining battery characteristics.

ADVANTAGEOUS EFFECTS OF INVENTION

As described above, the inventive negative electrode, when used as a secondary battery negative electrode, can provide a high initial efficiency, high capacity, high input-output characteristics, and high cycle characteristics.

Also, the inventive negative electrode manufacturing method can manufacture a negative electrode that ensures excellent cycle characteristics and, when used as a secondary battery negative electrode, has a high capacity and excellent initial charge-and-discharge characteristics.

BRIEF DESCRIPTION OF DRAWINGS

FIG. 1 is a cross-sectional view showing an example configuration of the inventive negative electrode;
FIG. 2 is an example cross-sectional SEM image of the inventive negative electrode;
FIG. 3 is an exploded view showing an example configuration (laminate-film type) of a lithium-ion secondary battery including the inventive negative electrode;
FIG. 4 is a surface SEM image of a negative electrode active material layer of Example 2;
FIG. 5 is a surface SEM image of a negative electrode active material layer of Example 4;
FIG. 6 is a surface SEM image of a negative electrode active material layer of Comparative Example 6;
FIG. 7 shows a portion of each of XPS spectra of the negative electrode active material layers of Examples 2 and 4;
FIG. 8 shows a portion of each of XPS spectra of the negative electrode active material layers of Examples 1 to 3 and Comparative Examples 4 and 5;
FIG. 9 shows a portion of each of XPS spectra of the negative electrode active material layers of Examples 1 and 2;
FIG. 10 shows a portion of XPS spectra of the negative electrode active material layers of Example 3 and Comparative Example 5;
FIG. 11 shows a portion of an XPS spectrum of the negative electrode active material layer of Comparative Example 4;
FIG. 12 is a surface SEM image of the negative electrode active material layer of Example 2 after charging and discharging; and
FIG. 13 shows a portion of an XPS spectrum of the negative electrode active material layer of Example 2 after twenty charge-and-discharge cycles.

DESCRIPTION OF EMBODIMENTS

As described above, in one solution to increase the battery capacity of lithium-ion secondary batteries, using, as a negative electrode for lithium-ion secondary batteries, a negative electrode using silicon oxide as its main material has been investigated. Such lithium-ion secondary batteries using silicon oxide are desired to have initial charge-and-discharge characteristics that are close to those of lithium-ion secondary batteries using a carbon-based active material. While the use of Li-doped SiO that can improve the initial charge-and-discharge characteristics is expected to significantly increase the capacity, further capacity improvement is desired for onboard and other applications.

Hence, the present inventors have earnestly studied to obtain a negative electrode that can, when used as a secondary battery negative electrode, improve the initial charge-and-discharge characteristics while providing high cycle characteristics and increase the battery capacity, and have arrived at the present invention.

That is, the present invention is a negative electrode comprising:

a negative electrode current collector with a roughened surface; and
a negative electrode active material layer provided on the negative electrode current collector,
wherein the negative electrode active material layer includes:

negative electrode active material particles containing a compound of lithium, silicon, and oxygen; and
a composite compound filled in interparticle gaps and a surface layer of the negative electrode active material particles, the composite compound at least containing chemically bonded carbon and oxygen atoms, the composite compound not being alloyed with the negative electrode active material particles, and

a ratio O/Si of the oxygen and the silicon constituting the negative electrode active material particles is in a range of 0.8 or more and 1.2 or less.

Also, the present invention is a method for manufacturing the inventive negative electrode, comprising steps of:

vapor-depositing a negative electrode active material layer containing silicon oxide on the negative electrode current collector; and
immersing the negative electrode active material layer in a solution containing lithium to modify the silicon oxide into the compound of lithium, silicon, and oxygen by redox method and form the composite compound.

Hereinafter, the present invention will be described in detail, but the present invention is not limited to the following description.

<Negative Electrode>

First, a configuration of the negative electrode is described with reference to the drawings.

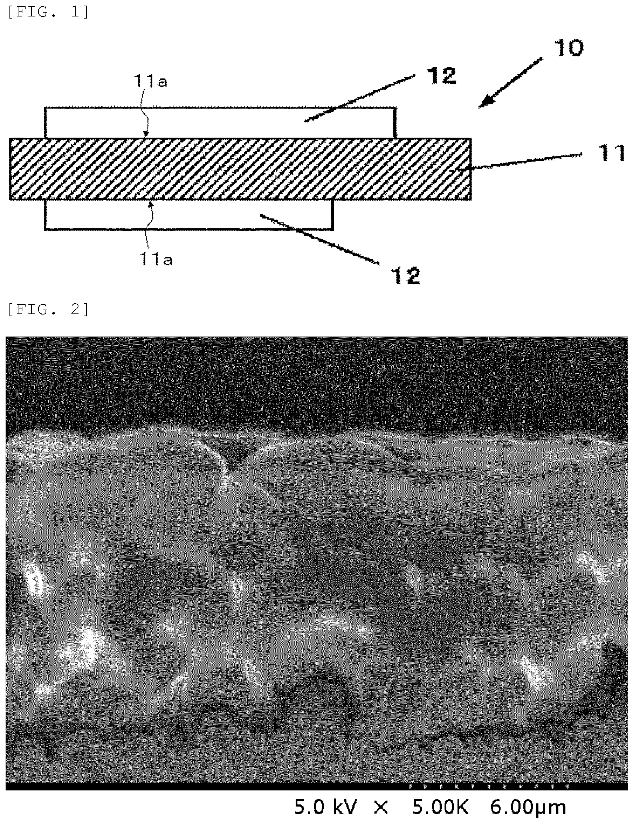

FIG. 1 shows an example cross-sectional view of the inventive negative electrode. As shown in FIG. 1, the negative electrode 10 is configured with a negative electrode current collector 11 and a negative electrode active material layer 12 provided on a surface 11a of the negative electrode current collector 11. The negative electrode active material layer 12 may be provided on both surfaces 11a of the negative electrode current collector 11 as shown in FIG. 1, or only on one of the surfaces 11a.

The surface 11a of the negative electrode current collector 11 is a roughened surface. In other words, the negative electrode active material layer 12 is provided on the roughened surface(s) 11a of the negative electrode current collector 11.

The negative electrode current collector 11 and the negative electrode active material layer 12 are described below.

[Negative Electrode Current Collector]

The negative electrode current collector 11 is made of a material with excellent conductivity and high mechanical strength. Examples of conductive materials that can be used for the negative electrode current collector 11 include copper (Cu) and nickel (Ni). Such conductive materials are preferably those that do not form an intermetallic compound with lithium (Li).

The negative electrode current collector 11 preferably contains carbon (C) or sulfur (S) in addition to its main element because these elements improve the physical strength of the negative electrode current collector. In particular, when the negative electrode includes an active material layer that expands during charging, the current collector containing the above element can inhibit deformation of the electrode including the current collector. The content of each of the above elements is preferably, but not limited to, 100 ppm or less by mass. This is because such content ensures more efficient inhibition of the deformation. Such inhibition of the deformation can further improve the cycle characteristics.

The surface 11a of the negative electrode current collector 11 should be roughened and preferably has a ten-point average roughness Rz of 1.5 um or more and 5.0 um or less. The negative electrode 10 including the negative electrode current collector 11 having the surface 11a with such a desirable average roughness Rz can not only hold the negative electrode active material layer 12 in a more stable manner but also ensure an appropriate density of the negative electrode active material particles in the negative electrode active material layer 12, resulting in more excellent battery characteristics. The roughened negative electrode current collector 11 is, for example, electrolytically treated, embossed, or chemically etched metal foil.

[Negative Electrode Active Material Layer]

The negative electrode active material layer 12 of the inventive negative electrode 10 includes negative electrode active material particles containing a compound of lithium, silicon, and oxygen, i.e., silicon compound particles containing lithium and oxygen. The negative electrode active material layer 12 is provided on the negative electrode current collector 11. The negative electrode 10 can be said to have a structure in which the negative electrode active material particles are directly held on the roughened surface 11a of the negative electrode current collector 11.

The inventive negative electrode 10 contains composite negative electrode active material particles including silicon compound particles, which can improve the battery capacity. In addition, unlike ordinary electrodes, the inventive negative electrode 10 can have the negative electrode active material layer 12 directly held on the roughened surface 11a of the negative electrode current collector 11 without the use of binders and conductive agents. This can reduce the area that is not involved in charging and discharging in the electrode and can also reduce excess voids, significantly improving the energy density of the electrode.

As such, the use of the negative electrode 10 including the densely held negative electrode active material layer 12 allows for an increase in the battery energy density that cannot be offered by powder electrodes, for example.

In the formed negative electrode active material layer 12, the negative electrode active material particles containing the compound of lithium, silicon, and oxygen can exist adjacent to each other. A composite compound (also referred to as a "C, O compound") that at least contains chemically bonded carbon and oxygen atoms and does not alloy with the negative electrode active material particles, i.e., does not react with the negative electrode active material particles is filled in interparticle gaps and a surface layer of the negative electrode active material particles. This composite compound serves as a protective layer that protects the interface between the negative electrode active material layer and the electrolyte. The presence of such a composite compound enables the inventive negative electrode to exhibit excellent cycle characteristics.

Further, the inventive negative electrode 10 has a ratio O/Si of the oxygen to the silicon constituting the negative electrode active material particles that is in the range of 0.8 or more and 1.2 or less. The ratio O/Si of 0.8 or more provides a higher oxygen ratio than a single substance of silicon, which leads to better cycle characteristics. The ratio O/Si of 1.2 or less is preferred because such a ratio ensures that the resistance of the silicon oxide is not too high. In particular, $SiO_x$ with x close to 1 is preferred because such a composition provides high cycle characteristics. It should be noted that the composition of the silicon compound in the present invention does not necessarily mean a purity of 100% and may contain trace amounts of impurity elements.

That is, the inventive negative electrode 10 can significantly increase the capacity while maintaining the battery characteristics.

On the other hand, the ratio O/Si of less than 0.8 increases the capacity but increases the area where $Si^{0+}$ reacts with the electrolyte, which leads to deteriorated cycle characteristics. The ratio O/Si of more than 1.2 results in a load substance, in which case, too, the battery characteristics will be deteriorated. The ratio O/Si is a molar ratio and preferably as close to 1 as possible.

The composite compound serving as a protective layer can be a ring-opening decomposition product of a composite of an ether-based solvent and a polyphenylene compound or a polycyclic aromatic compound, or a ring-opening decomposition product of the composite complexed with lithium.

Such a composite compound can be easily formed during doping the negative electrode active material particles with Li by a redox method.

In particular, the composite compound that can serve as a protective layer and at least contains chemically bonded carbon and oxygen atoms preferably contains lithium as part thereof. In other words, the composite compound preferably contains lithium at least at part thereof. Compounding the composite oxide containing carbon and oxygen with lithium to incorporate lithium in the composite as part thereof allows the composite oxide to behave similarly to a kind of solid electrolyte, which facilitates permeation of Li particularly as compared to when the composite oxide only contains carbon and oxygen. This can improve the diffusivity of lithium and thus further improve the battery characteristics.

Silicon monoxide, as typified by common silicon oxides, is often expressed as composites of zerovalent to tetravalent Si. For example, when an Si2p spectrum is obtained for silicon monoxide by photoelectron spectroscopy, an $Si^{0+}$ peak appears near the bonding energy of 99 eV and an $Si^{4+}$ peak appears near the bonding energy of 103 eV, so that the zerovalent state and the $Si^{4+}$ state attributed to these peaks are especially dominant in the spectrum. On the other hand, when the negative electrode active material particles containing silicon are directly held on the negative electrode current collector 11, controlling the state of the roughened portion of the surface 11a of the negative electrode current collector 11, the temperature of the negative electrode current collector 11 (the substrate on which the vapor deposition is to be performed), the moving speed of the negative electrode current collector 11, and gas injection, among others, can alter the structure of the silicon compound and create a surface in which the compound state of $Si^{1+}$ to $Si^{3+}$, especially $Si^{2+}$, is dominant.

Meanwhile, silicon in an $Si^{4+}$ state exists as silicon dioxide, which makes it difficult for Li to react therewith.

Hence, the portion of the negative electrode active material particles involved in the initial phase of Li insertion, i.e., the surface layer portion of the negative electrode active material particles, can be turned into a lower-valence composite oxide state that makes it easier for Li to enter, so that the negative electrode active material particles facilitate smoother insertion. Accordingly, in the negative electrode, the silicon present at the boundary between the composite compound and the negative electrode active material particles is preferably in a compound state of $Si^{1+}$ to Si3+.

For even smoother introduction of Li, the negative electrode active material layer 12 may be formed to have a multilayer structure of two or more layers. However, merely employing such a multilayer structure will render the battery characteristics insufficient because such a structure leads to an increased reaction area.

Hence, the negative electrode active material layer 12 can be proposed, where the above composite compound serving as a protective layer for inhibiting reaction with the electrolyte is filled in some gaps between these layers to inhibit decomposition of the electrolyte, facilitate the introduction of Li, and maintain the battery characteristics.

In addition, primary particles of the negative electrode active material particles have a multilayer structure, and the composite compound is similarly filled in their interlayer gaps to ensure reactivity with the electrolyte.

In particular, the interface between the composite compound and the negative electrode active material particles, i.e., the interface of the silicon oxide, is preferably formed by a composite compound containing silicon in a mono- to trivalent compound state. Ordinary silicon oxides contain a large amount of silicon in a tetravalent compound state, which makes it difficult to insert Li. However, creating a lower valence state can improve the battery characteristics.

For example, this composite compound can be observed by a scanning X-ray photoelectron spectrometer PHI Quantera II, available from ULVAC-PHI, Inc. The beam diameter of the X-rays can be 100 um, and a neutralizing gun can be used.

The composite compound can have a plurality of bonding states with different C1s bonding energies as analyzed by the above photoelectron spectroscopy.

As such, the composite compound may have a plurality of bonding states with different bonding energies. In such cases, mixing of a carbon portion that forms a conductive layer and the composite compound, which inhibits reaction with the electrolyte, enables formation of a conductive protective layer.

For example, the composite compound can be a ring-opening decomposition product of a composite of an ether-based solvent and a polyphenylene compound or a polycyclic aromatic compound, or a ring-opening decomposition product of the composite complexed with lithium.

These composite compounds can be easily formed during doping the negative electrode active material particles with Li by a redox method, which will be described below.

Also, the negative electrode active material particles after repeated charging and discharging, e.g., after at least twenty charge-and-discharge cycles, preferably include silicon in an $Si^{0+}$ state and silicon in a compound state of $Si^{1+}$ to $Si^{3+}$.

If silicon in the $Si^{0+}$ state is dominant, reaction with the electrolyte will be accelerated. Accordingly, a structure is employed in which such silicon is combined with silicon oxide in the $Si^{1+}$ to $Si^{3+}$ valence state (compound state) such that silicon in the $Si^{0+}$ state does not directly contact the electrolyte. This ensures smooth charging and discharging.

The valence state of silicon in the negative electrode active material particles can be determined by subjecting the photoelectron spectrum obtained by the above photoelectron spectroscopy to a waveform separation process and confirming the presence or absence of peaks attributed to the respective valence states of silicon in the spectrum.

The negative electrode active material particles are vapor-deposited on the roughened portions of the surface 11a of the negative electrode current collector 11.

When these particles are defined as primary particles, it is preferred that second particles as an aggregate of the primary particles be formed after charging and discharging.

This can be controlled by altering the roughened state of the surface 11a of the negative electrode current collector 11. For example, a larger roughening interval leads to a smaller secondary particle population. On the other hand, if the roughening interval is narrow and the primary particles are too densely packed, it becomes difficult to generate the secondary particles during charging and discharging.

The secondary particles are preferably in the form of being separated from each other in an in-plane direction. By performing charging and discharging in this state, the stable negative electrode active material layer 12 can be maintained.

$Si^{0+}$ constituting the negative electrode active material layer before charging and discharging is preferably as non-crystalline (amorphous) as possible. Specifically, the crystallite size for Si(111) is preferably 1.0 nm or less. Accordingly, it is preferred that the negative electrode active material particles before charging and discharging have a peak originating from the Si (111) crystal plane obtained by X-ray diffraction using Cu-Kα rays and the crystallite size corresponding to this crystal plane is 1.0 nm or less. The negative electrode including such negative electrode active material particles can inhibit reactivity with the electrolyte and further improve the battery characteristics.

The degree of enlargement of Li silicate and the degree of crystallization of Si (e.g., the crystallite size corresponding to the Si (111) crystal plane) can be confirmed by X-ray diffraction (XRD). For example, an XRD measurement can be performed under the following conditions.

XRD: D8 Advance from Bruker Corporation

As an X-ray diffractometer, D8 Advance, available from Bruker Corporation, can be used for example.

The X-ray source is Cu-Kα rays. Using an Ni filter, the measurement is taken for 10° to 40° with an output of 40 kV/40 mA, a slit width of 0.3°, a step width of 0.008°, and a counting time of 0.15 seconds per step.

A specific example of the inventive negative electrode is now described in further detail with reference to FIG. 2.

FIG. 2 is a cross-sectional SEM image of an example of the inventive negative electrode. The component having a surface with ridges shown in the lower region of FIG. 2 is the negative electrode current collector with a roughened surface.

The portions that have grown in a fan shape around the ridges on the roughened surface of the negative electrode current collector are the negative electrode active material particles. As described earlier, the negative electrode active material particles contain the compound of lithium, silicon, and oxygen. Although not clearly visible in the SEM image of FIG. 2, the composite compound at least containing chemically bonded carbon and oxygen atoms is filled in the interparticle gaps and surface layer of the negative electrode active material particles. As such, the negative electrode with the cross-section shown in FIG. 2 includes the negative electrode material layer that is provided on the negative electrode current collector and includes the above negative electrode active material particles and the above composite compound.

As will be appreciated from the SEM image of FIG. 2, the negative electrode active material layer of the inventive negative electrode contains densely packed negative electrode active material particles with very few voids.

[Negative Electrode Manufacturing Method]

The inventive negative electrode manufacturing method includes the steps of:

vapor-depositing a negative electrode active material layer containing silicon oxide on the negative electrode current collector; and

immersing the negative electrode active material layer in a solution containing lithium to modify the silicon oxide into the compound of lithium, silicon, and oxygen by redox method and form the composite compound.

The inventive negative electrode manufacturing method can manufacture the inventive negative electrode. However, the method for manufacturing the inventive negative electrode is not limited to the inventing manufacturing method described herein.

A specific example of the inventive negative electrode manufacturing method is described below. However, the inventive negative electrode manufacturing method is not limited to the example described below.

First, a layer (negative electrode active material layer) including silicon compound (silicon oxide) particles containing oxygen is produced. Here, a negative electrode active material layer containing silicon oxide is vapor-deposited on a negative electrode current collector.

This silicon oxide can be formed by depositing silicon oxide gas on a negative electrode current collector with a roughened surface, e.g., a roughened foil (e.g., roughened copper foil) having a surface ten-point average roughness Rz of 1.5 um or more and 5.0 um or less (e.g., 2.5 um). Specific procedure is as follows.

First, a raw material that generates silicon oxide gas is heated at a temperature of 1100°C or higher under reduced pressure to generate the silicon oxide gas. The raw material can be a mixture of silicon metal powder and silicon dioxide powder. Given the presence of surface oxygen in the silicon metal powder and a trace amount of oxygen in the reaction furnace, the mixing molar ratio is preferably in the range of 0.9 < silicon metal powder/silicon dioxide powder < 1.2.

Silicon oxide can also be formed by performing vapor deposition using silicon metal and then introducing oxygen gas into the deposited silicon. However, such a method is unable to control the valence, resulting in a composite in which the silicon is separated into a zerovalent state and a tetravalent compound state.

Similarly, it is also possible to introduce reducing gas (hydrogen) into silicon dioxide gas. However, it is difficult to introduce sufficient hydrogen into the vapor whose speed is close to sonic.

Consequently, it is preferable to use silicon metal and silicon dioxide powder as the raw material for the inventive negative electrode manufacturing method.

The silicon oxide gas generated in the above manner is deposited on the roughened portions of the surface of the negative electrode current collector and forms the primary particles with a columnar structure.

By altering the roughened structure of the surface of the negative electrode current collector, the structure of the primary particles can be altered.

The solidification heat during the deposition as well as the radiation heat from the heating portion accelerate the crystallization of the negative electrode active material layer.

Accordingly, it is preferable to perform the vapor deposition in such a way that no crystallization of Si will occur by virtue of moving the negative electrode current collector to reduce the heat load.

In particular, unlike silicon, silicon oxide is sublimable and can be deposited quickly, and there is no risk of being affected by radiation heat from molten silicon, which is an issue with silicon films. As such, silicon oxide is suitable for forming active materials by vapor deposition.

Vapor deposition can be performed on both roughened surfaces of the negative electrode current collector. For example, vapor deposition can be performed on one roughened surface of the negative electrode current collector, and then the negative electrode current collector can be inverted for vapor deposition on the other roughened surface thereof.

Then, Li is inserted into the negative electrode active material layer containing the silicon oxide produced as described above, whereby negative electrode active material particles containing silicon oxide particles in which lithium has been inserted are produced. In other words, silicon oxide particles are thereby modified such that an Li compound is generated inside the silicon oxide particles. The insertion of Li is preferably performed by a redox method.

For modification by the redox method, for example, lithium can first be inserted by immersing the negative electrode active material layer containing silicon oxide particles in a solution A obtained by dissolving lithium in an ether solvent. The solution A may further contain a polycyclic aromatic compound or a linear polyphenylene compound. After the lithium insertion, active lithium can be eliminated from the silicon oxide particles by immersing the silicon active material particles in a solution B containing a polycyclic aromatic compound or its derivatives. The solvent for this solution B can be, for example, an ether-based solvent, a ketone-based solvent, an ester-based solvent, an alcohol-based solvent, an amine-based solvent, or a mixture of these solvents. Alternatively, the resulting silicon active material particles after the immersion in the solution A may be heat treated under inert gas. Applying heat treatment can stabilize the Li compound. After that, rinsing may be performed with alcohol, alkaline water in which lithium carbonate is dissolved, weak acid, or pure water, etc.

The ether-based solvent for the solution A can be, for example, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, or a mixture of these solvents. Among these, tetrahydrofuran, dioxane, and 1,2-dimethoxyethane are particularly preferred. These solvents are preferably dehydrated and preferably deoxygenated.

The polycyclic aromatic compound contained in the solution A can be one or more of naphthalene, anthracene, phenanthrene, naphthacene, pentacene, pyrene, pycene, triphenylene, coronene, chrysene, and their derivatives. The linear polyphenylene compound can be one or more of biphenyl, terphenyl, and their derivatives.

The polycyclic aromatic compound contained in the solution B can be one or more of naphthalene, anthracene, phenanthrene, naphthacene, pentacene, pyrene, pycene, triphenylene, coronene, chrysene and their derivatives.

The ether-based solvent for the solution B can be diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, etc.

The ketone-based solvent can be acetone, acetophenone, etc.

The ester-based solvent can be methyl formate, methyl acetate, ethyl acetate, propyl acetate, isopropyl acetate, etc.

The alcohol-based solvent can be methanol, ethanol, propanol, isopropyl alcohol, etc.

The amine-based solvent can be methylamine, ethylamine, ethylenediamine, etc.

The composite compound at least containing chemically bonded carbon and oxygen atoms to be filled in the interparticle gaps and the surface layer of the negative electrode active material particles can be formed, for example, by ring-opening decomposition of a composite of an ether-based solvent and a polyphenylene compound or a polycyclic aromatic compound contained in the solution A, or by ring-opening decomposition of the composite complexed with lithium (e.g., a composite of a polycyclic aromatic compound complexed with Li and an ether-based solvent).

Factors such as the solvent temperature, the type and concentration of the polyphenylene compound or polycyclic aromatics contained in the solvent, and the concentration of the polycyclic aromatics complexed with Li can be adjusted to control the state of the filling coating (composite compound).

The resulting composite compound may contain more than one compounds.

The inventive negative electrode can be produced in the above manner.

<Lithium-Ion Secondary Battery>

The inventive negative electrode can be used as a negative electrode of non-aqueous electrolyte secondary batteries, e.g., lithium-ion secondary batteries.

An example of a laminated film type lithium-ion secondary battery is now described as a specific example of non-aqueous electrolyte secondary batteries for which the inventive negative electrode can be used.

[Configuration of Laminate Film Type Lithium-Ion Secondary Battery]

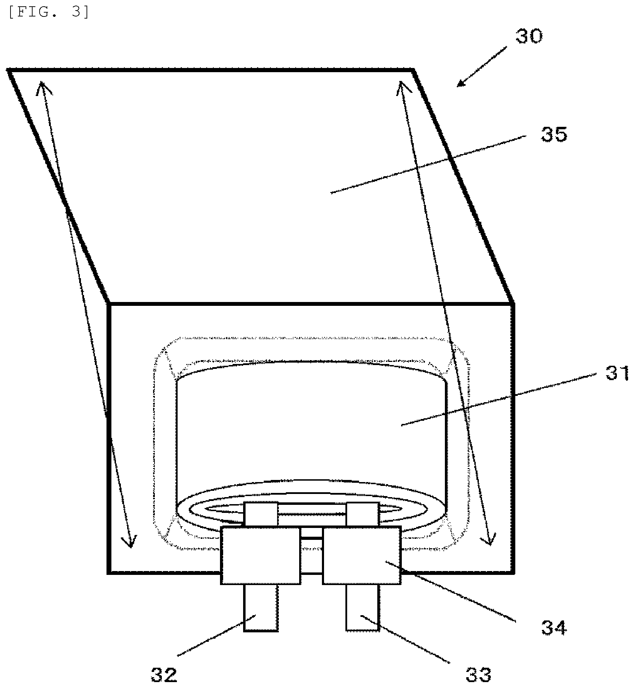

The laminate film type lithium-ion secondary battery 30 shown in FIG. 3 includes a wound electrode body 31 stored inside an exterior member 35 that is mainly sheet-shaped. The wound electrode body 31 includes a positive electrode, a negative electrode, and a separator provided between the positive and negative electrodes and is formed by winding them. In another implementation, a laminate including positive and negative electrodes and separators each provided one of the positive electrodes and one of the negative electrode may be stored without being wound. The electrode bodies of both types have a positive electrode lead 32 attached to the positive electrode and a negative electrode lead 33 attached to the negative electrode. The outermost periphery of the electrode body is protected by a protection tape.

For example, the positive electrode lead 32 and the negative electrode lead 33 are extended outward in one direction from the interior of the exterior member 35. The positive electrode lead 32 is made of, for example, a conductive material such as aluminum, and the negative electrode lead 33 is made of, for example, a conductive material such as nickel or copper.

The exterior member 35 is composed of, for example, laminate films each including a bonding coat, a metal layer, and a surface protection layer laminated in this order. Two laminate films are fused, or bonded with an adhesive or other means, at outer edges of the respective bonding coats such that the bonding coats face the electrode body 31. For example, the portion to be fused is a film such as one made of polyethylene or polypropylene, and the metal portion is aluminum foil. The protection layer is nylon, for example.

Sealing films 34 are inserted in the respective gaps between the exterior member 35 and the positive electrode lead 32 and between the exterior member 35 and the negative electrode lead 33 to prevent entry of outside air. The sealing film is made of, for example, polyethylene, polypropylene, or polyolefin resin.

Each component is described below.

[Positive Electrode]

The positive electrode has, for example, a positive electrode active material layer on both sides or on one side of a positive electrode current collector, similarly to the negative electrode 10 shown in FIG. 1.

The positive electrode current collector is made of a conductive material such as aluminum, for example.

The positive electrode active material layer contains any one or two or more of positive electrode materials capable of occluding and releasing lithium ions, and may contain a positive electrode binder, a positive electrode conductive agent, a dispersing agent, and other materials, depending on design.

The positive electrode material is preferably a lithium-containing compound. Examples of the lithium-containing compound include a composite oxide formed of lithium and a transition metal element, and a phosphate compound containing lithium and a transition metal element. Among these positive electrode materials, a compound containing at least one or more of nickel, iron, manganese, and cobalt are preferable. For example, such a compound can be expressed by a chemical formula of $Li_xM_1O_2$ or $Li_yM_2PO_4$, where $M_1$ and $M_2$ represent at least one or more transition metal elements. The values of "x" and "y" vary depending on the charging and discharging state of the relevant battery, and are typically in the range of $0.05 \leq x \leq 1.10$ and $0.05 \leq y \leq 1.10$.

Examples of the composite oxide containing lithium and a transition metal element include lithium cobalt composite oxide ($Li_xCoO_2$), lithium nickel composite oxide ($Li_xNiO_2$), and lithium nickel cobalt composite oxide. Examples of the lithium nickel cobalt composite oxide include lithium nickel cobalt aluminum composite oxide (NCA) and lithium nickel cobalt manganese composite oxide (NCM).

Examples of the phosphate compound containing lithium and a transition metal element include a lithium iron phosphate compound ($LiFePO_4$) and a lithium iron manganese phosphate compound ($LiFe_{1-u}Mn_uPO_4$ ($0 < u < 1$). The use of these positive electrode materials provides a high battery capacity and excellent cycle characteristics.

The positive electrode binder can be, for example, any one or more of polymer materials and synthetic rubbers. Examples of polymer materials include polyvinylidene fluoride, polyimide, polyamideimide, aramid, polyacrylic acid, lithium polyacrylate, sodium polyacrylate, and carboxymethyl cellulose. Examples of synthetic rubbers include styrene butadiene-based rubbers, fluorine-based rubbers, and ethylene propylene diene.

The positive electrode conductive agent can be, for example, any one or more of carbon materials such as carbon black, acetylene black, graphite, Ketjen black, carbon nanotubes, and carbon nanofiber.

[Negative Electrode]

The inventive negative electrode is used as the secondary battery negative electrode. The negative electrode constituting the secondary battery preferably has a negative electrode charge capacity greater than electrical capacitance (charge capacity as the battery) provided by the positive electrode active material. This can inhibit the precipitation of lithium metal on the negative electrode.

In this example, the positive electrode active material layer is provided partially on both sides of the positive electrode current collector. Likewise, the inventive negative electrode active material layer is provided partially on both sides of the negative electrode current collector. In such an arrangement, for example, the negative electrode active material layer provided on the negative electrode current collector preferably includes a region where it does not face the positive electrode active material layer. This is intended to ensure a stable battery design.

The above region where the positive and negative electrode active material layers do not face each other is almost immune from the effect of charging and discharging. Thus, the negative electrode active material layer can remain in the same state as just after its formation. This enables repeatable and precise investigation of the composition and other properties of the negative electrode active material regardless of whether charging and discharging have been conducted.

[Separator]

The separator separates the lithium metal or the positive and negative electrodes and permits passage of lithium ions therethrough while preventing short-circuit current due to contact of both electrodes. The separator is made of, for example, a porous film of synthetic resin or ceramics, and may have a laminate structure with two or more laminated porous films. Examples of the synthetic resin include polytetrafluoroethylene, polypropylene, and polyethylene.

[Electrolyte]

At least a part of the active material layers or the separator is impregnated with a liquid non-aqueous electrolyte (electrolyte). This electrolyte contains electrolyte salt dissolved in a solvent and may contain additives and other materials.

The solvent can be, for example, a non-aqueous solvent. Examples of the non-aqueous solvent include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least one or more of ethylene carbonate, propylene carbonate, dimethyl carbonate, diethyl carbonate, and ethylmethyl carbonate is preferably used. This is because these solvents provide better characteristics. In such cases, a high viscosity solvent such as ethylene carbonate or propylene carbonate can be combined with a low viscosity solvent such as dimethyl carbonate, ethylmethyl carbonate, or diethyl carbonate to provide even more excellent characteristics. This is because the use of such combined solvents improves dissociation of electrolyte salt and ionic mobility.

In particular, as the solvent, at least one of halogenated chain carbonate esters and halogenated cyclic carbonate esters is preferably contained. The use of such a solvent allows a stable coating to be formed on the surface of the negative electrode active material during charging and discharging, especially during charging. The halogenated chain carbonate esters are chain carbonate esters having halogen as a constituent element (at least one hydrogen is substituted by halogen). The halogenated cyclic carbonate esters are cyclic carbonate esters having halogen as a constituent element (i.e., at least one hydrogen is substituted by halogen).

The halogen is preferably, but not limited to, fluorine. This is because fluorine provides a better coating than other halogens. A larger number of halogens is more preferred in the context of providing a more stable coating and reducing a decomposition reaction of the electrolyte.

Examples of the halogenated chain carbonate esters include fluoromethyl methyl carbonate and difluoromethyl methyl carbonate. Examples of the halogenated cyclic carbonate esters include 4-fluoro-1,3-dioxolane-2-one and 4,5-difluoro-1,3-dioxolane-2-one.

The solvent preferably contains a cyclic carbonate ester having unsaturated carbon bond as a solvent additive. This is because a stable coating on the negative electrode surface can be formed during charging and discharging, inhibiting a decomposition reaction of the electrolyte. Examples of the cyclic carbonate esters having unsaturated carbon bond include vinylene carbonate and vinyl ethylene carbonate.

The solvent preferably contains sultone (cyclic sulfonic acid ester) as a solvent additive. This is because the chemical stability of the battery can be improved. Examples of sultone include propane sultone and propene sultone.

In addition, the solvent preferably contains acid anhydride. This is because the chemical stability of the electrolyte can be improved. Examples of the acid anhydride include propanedisulfonic acid anhydride.

The electrolyte salt can contain, for example, any one or more of light metal salts such as lithium salt. Examples of the lithium salt include lithium hexafluorophosphate ($LiPF_6$), and lithium tetrafluoroborate ($LiBF_4$).

The content of the electrolyte salt in the solvent is preferably 0.5 mol/kg or more and 2.5 mol/kg or less. Such a content ensures a high ionic conductivity.

[Method for Manufacturing Laminate Film Type Secondary Battery]

The laminated film type secondary battery described above can be manufactured, for example, by the following procedure.

First, a positive electrode is produced by using the above positive electrode material. The positive electrode active material is mixed with the positive electrode binder, the positive electrode conductive agent, and other materials as necessary to form a positive electrode mixture, which is then dispersed in an organic solvent to obtain slurry of the positive electrode mixture. The mixture slurry is then applied to a positive electrode current collector by using a coating apparatus such as a knife roll or a die coater with a die head, followed by drying with hot air to obtain a positive electrode active material layer. Finally, the positive electrode active material layer is compressed by a roll press machine or other means. The positive electrode active material layer may be heated during the compression, and the compression may be repeated multiple times.

Then, by following the same procedure as for the production of the negative electrode 10 described above, a negative electrode active material layer is formed on a negative electrode current collector to produce a negative electrode..

In producing the positive and negative electrodes, the respective active material layers are formed on both sides of the positive and negative electrode current collectors. For each electrode, the active materials applied to both sides of the current collector may have different lengths (see FIG. 1).

An electrolyte is then prepared. Then, the positive electrode lead 32 is attached to the positive electrode current collector and the negative electrode lead 33 is attached to the negative electrode current collector by ultrasonic welding or other means. The positive and negative electrodes are laminated while sandwiching the separator therebetween and wound to produce the wound electrode body 31, and the protection tape is adhered to the outermost periphery of the electrode body. The wound electrode body 31 is shaped into a flat form. The wound electrode body 31 is wrapped with the folded film-shaped exterior member 35, followed by bonding the insulating portions of the exterior member by thermal fusion to encapsulate the wound electrode body 31 with one side left open. The sealing films are then inserted between the exterior member 35 and the positive electrode lead 32 and between the exterior member 35 and the negative electrode lead 33. The above prepared electrolyte is fed from the open portion in a prescribed amount for vacuum impregnation. After the impregnation, the open portion is sealed by vacuum thermal fusion. This completes the manufacturing of the laminate film type lithium-ion secondary battery 30.

The non-aqueous electrolyte secondary battery such as the laminate film type lithium-ion secondary battery 30 produced as described above preferably has a negative electrode utilization rate during charging and discharging that is 93% or more and 99% or less. Setting the negative electrode utilization rate to not less than 93% will eliminate a decrease in the initial charge efficiency, providing a greater improvement in the battery capacity. Meanwhile, setting the negative electrode utilization rate to not more than 99% will eliminate the precipitation of Li, ensuring the safety.

EXAMPLES

Hereinafter, the present invention will be more specifically described with showing Examples of and Comparative Examples, but the present invention is not limited to these Examples.

(Comparative Example 1)

A graphite negative electrode was prototyped to provide a reference capacity when using a graphite negative electrode.

The negative electrode of Comparative Example 1 was formed by mixing artificial graphite, conductive agent (acetylene black), SBR (styrene-butadiene rubber), and CMC (carboxymethylcellulose) in proportions of 95.7 mass% : 1 mass% : 1.8 mass% : 1.5 mass%.

(Comparative Example 2)

An electrodes was produced by using powdered Li-doped SiO coated with carbon (denoted as "Li-SiO-C").

The electrode of Comparative Example 2 was formed by mixing Li-SiO-C, PAA-Na (sodium polyacrylate), and conductive agent (acetylene black) in proportions of 90 mass% : 8 mass% : 2 mass%.

Li-Si-O was prepared by the following procedure. First, silicon and silicon dioxide as raw materials were mixed and vaporized at 1300°C to be deposited on a deposition substrate, followed by being quenched to produce a mass of SiO. The mass SiO was pulverized into particles with a median diameter of 7 $\mu$m, which were then doped with Li by a redox method. After the doping, the particles were heat treated to stabilize the Li silicate. The sample was thus produced.

(Comparative Examples 3 to 5, Examples 1 to 4)

Respective negative electrodes of Comparative Examples 3 to 5 and Examples 1 to 4 were produced by the following procedures. In these examples, surface-roughened copper foil with a surface ten-point average roughness (roughness) Rz of 2.5 um was used as the negative electrode current collector.

[Production of Negative Electrode Active Material Layer]

(Comparative Examples 3 and 4)

In Comparative Examples 3 and 4, gravel-like silicon metal was put in a carbon crucible, in which the silicon was melted and vaporized under vacuum by using an electron gun. Using a movable apparatus, the surface-roughened copper foil (to serve as a negative electrode current collector) was placed on a roller and a silicon film was formed on the surface-roughened copper foil while moving the roller.

In Comparative Example 3, water vapor was introduced into the silicon vapor stream during film formation to attempt to force oxidation. In Comparative Example 4, introduction of oxygen gas was also attempted, but oxygen could not be fully introduced.

(Comparative Example 5)

Silicon metal and silicon dioxide were put in a carbon crucible and heated to 1200°C in a vacuum atmosphere of $10^{-2}$ Pa to draw off the vapor. The vapor was directly loaded onto the roughened copper foil as in Comparative Example 3.

In this way, the electrodes including the roughened copper foil and the negative electrode active material layer containing silicon oxide on the roughened copper foil were obtained.

(Examples 1 to 4)

In Examples 1 to 4, as in Comparative Example 5, a raw material made of a mixture of silicon metal and silicon dioxide was introduced into a furnace and vaporized in a vacuum atmosphere of $10^{-2}$ Pa. The vaporized material was then deposited on a negative electrode current collector to obtain a negative electrode active material layer.

While the film formation in Examples 1 to 4 was performed in the same manner as in Comparative Example 5, the Si valence state for the topmost layer was altered by controlling the film formation rate and heat load. In each of Examples 1 and 4 and Comparative Example 5, a multilayer composed of a total of five films was deposited.

In Example 2, a multilayer composed of a total of twenty films was deposited, and the topmost layer was treated in the same manner as in Example 1. In Example 2, the film thickness per layer was reduced compared to Example 1 in order to further reduce the heat load. These resulted in a slightly larger number of interlayer gaps in Example 2, so that Example 2 had a slightly lower initial efficiency than Example 1 as shown below.

In Example 3, a negative electrode active material layer was obtained in the same manner as in Comparative Example 5, followed by inserting Li by a redox method described below.

[Lithium Insertion and Filling Layer Formation]

(Examples 1 to 4)

The negative electrode active material layers obtained in Examples 1 to 4 were taken out after sufficient cooling and modified by inserting lithium into silicon compound particles by a redox method using an ether-based solvent in which water content was reduced to 50 mass ppm. In Examples 1 to 3, biphenyl as a polyphenylene compound was incorporated in the ether-based solvent used for the lithium insertion by the redox method. In Example 4, the temperature during the redox reaction was increased to double the biphenyl concentration and thereby increase the product.

The lithium-inserted negative electrode active material layers obtained in Examples 1 to 4 were observed by scanning electron microscopy (SEM). Also, the lithium-inserted negative electrode active material layers obtained in Examples 1 to 4 were analyzed by X-ray photoelectron spectroscopy (XPS) to confirm the presence of a filling layer including a composite compound containing chemically bonded carbon and oxygen atoms, and to examine the silicon valence state on the surface of the negative electrode active material particles as well as a ratio O/Si of silicon to oxygen constituting the negative electrode active material particles.

The results showed that each of the lithium-inserted negative electrode active material layers obtained in Examples 1 to 4 had negative electrode active material particles containing a compound of lithium, silicon, and oxygen, and a filling layer including a composite compound containing chemically bonded carbon and oxygen atoms, where the filling layer was filled in the interparticle gaps and the surface layer of the negative electrode active material. The results also showed that the ratio O/Si of silicon to oxygen constituting the negative electrode active material particles was 1.

In the negative electrodes of Examples 1, 2, and 4, silicon present on the surface of the negative electrode active material particles, i.e., at the boundary between the composite compound and the negative electrode active material particles was in the compound state of $Si^{1+}$ to $Si^{3+}$. In the negative electrode of Example 3, the valence state of silicon present on the surface of the negative electrode active material particles was similar to that of silicon of ordinary silicon oxide.

The results of XPS analysis showed that, in each of the negative electrodes of Examples 1 to 4, the composite compound containing chemically bonded carbon and oxygen atoms contained lithium as part thereof.

(Comparative Examples 3 and 4)

The silicon films formed in Comparative Examples 3 and 4 were subjected to lithium insertion and filled with the filling layer, as in Example 1. The negative electrodes of Comparative Examples 3 and 4 were thus obtained.

(Comparative Example 5)

For the negative electrode active material layer formed in Comparative Example 5, the complex concentration in the solution containing an ether solvent was greatly reduced, and the filling layer was formed without lithium insertion into the silicon oxide particles. The negative electrode of Comparative Example 5 was thus obtained.

(Comparative Example 6)

In Comparative Example 6, an Li-inserted electrode was obtained in the same manner as in Example 2, followed by rinsing the electrode with ether containing 10% water to remove the filling layer on the surface. The negative electrode of Comparative Example 6 was thus obtained.

The negative electrodes of Comparative Examples 3 to 6 were subjected to SEM observation and XPS analysis, in the same manner as in Example 1. The results are summarized in Table 1 below.

[Analysis]

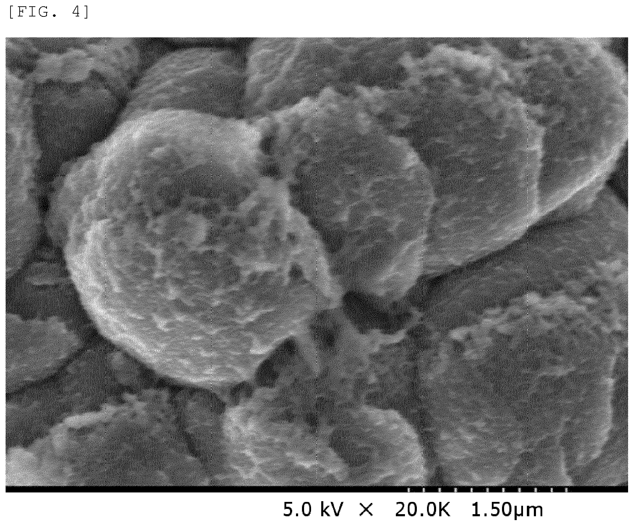

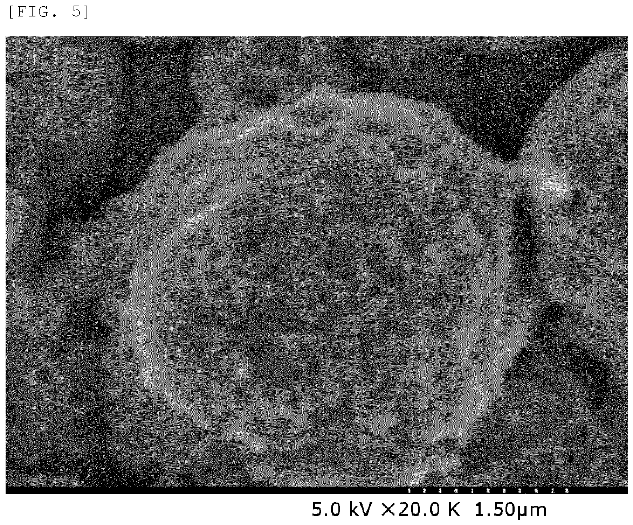

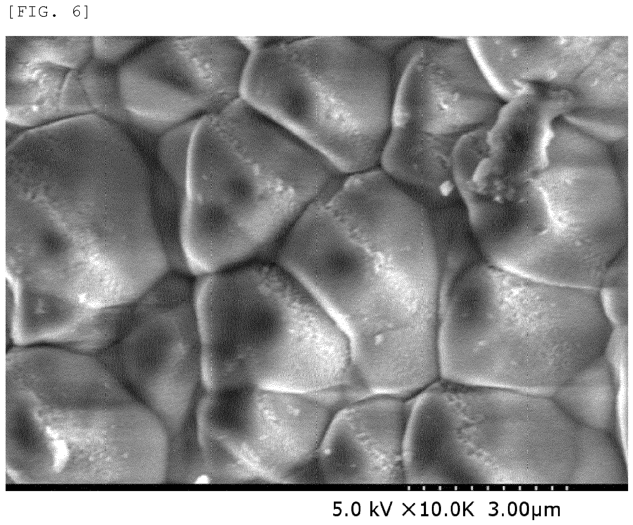

SEM images of the negative electrode active material layers of Examples 2 and 4 and Comparative Example 6 are shown in FIGS. 4 to 6, respectively. From the comparison of the SEM images of Examples 2 and 4 shown in FIGS. 4 and 5 with that of Comparative Example 6 shown in FIG. 6, it can be seen that there is a substance in the interparticle gaps and the surface layer of the particles in the SEM images of Examples 2 and 4 that is not observed in the SEM image of Comparative Example 6. The XPS analysis revealed that this substance present in Examples 2 and 4 but absent in Comparative Example 6 was a composite compound containing chemically bonded carbon and oxygen atoms.

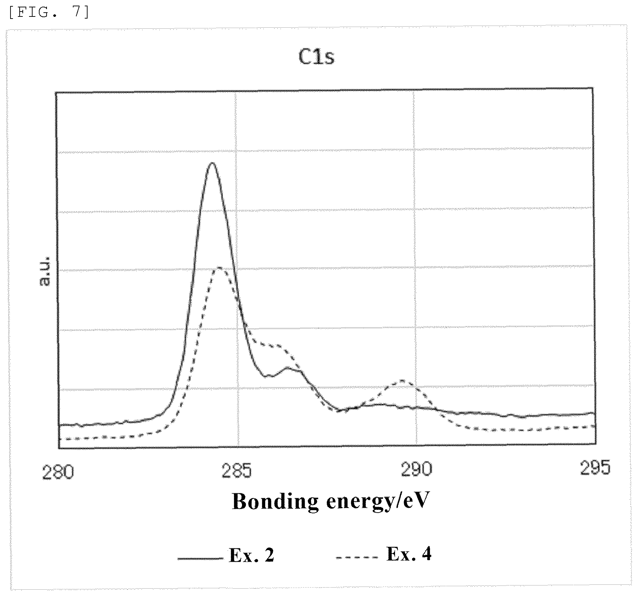

FIG. 7 shows C1s XPS spectra of the respective negative electrode active material layers of Examples 2 and 4. In the spectrum of Example 4 (dashed line), peaks around 285.8 eV and 289.6 eV were observed, which indicates the presence of a composite compound having a plurality of bonding states with different C1s bonding energies. While the exact assignments of the peaks around 285.8 eV and 289.6 eV are unknown, the peak around 285.8 eV and the peak around 289.6 eV are generally believed to be assigned to the C-O bond and the O-C=O bond, respectively. A peak around 285.8 eV was also observed in the spectrum of Example 2 (solid line) .

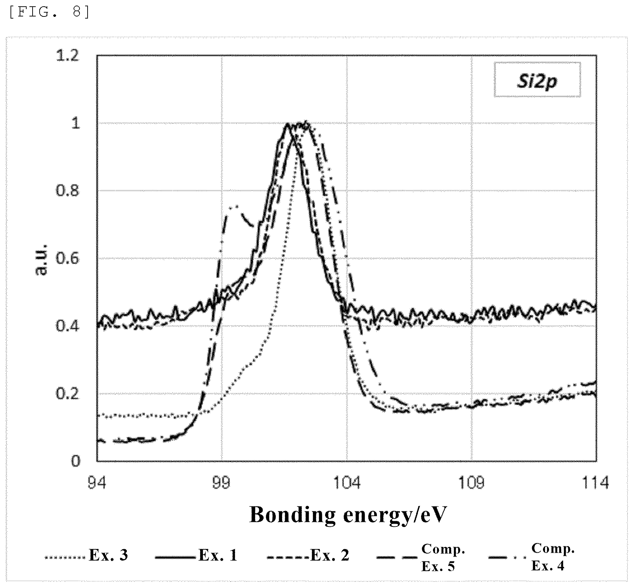

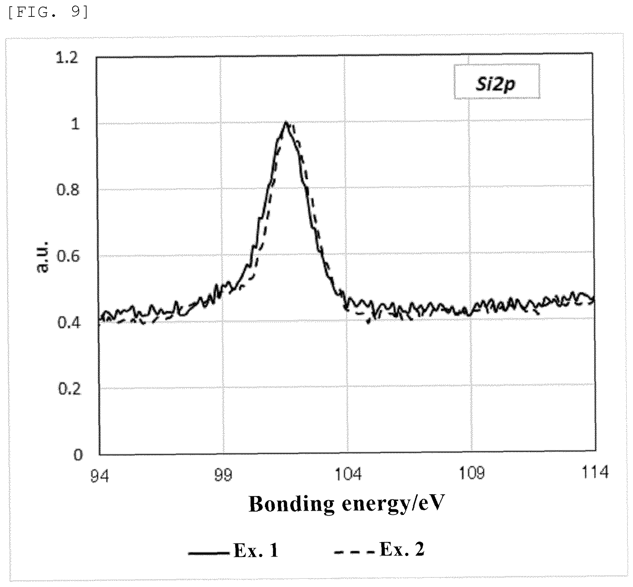

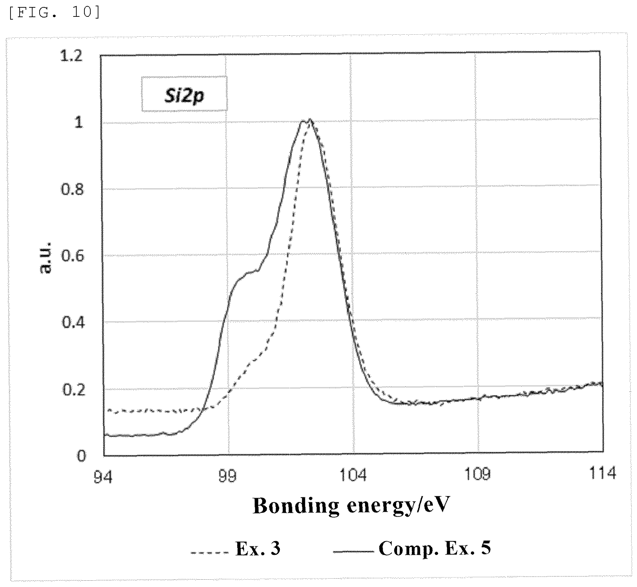

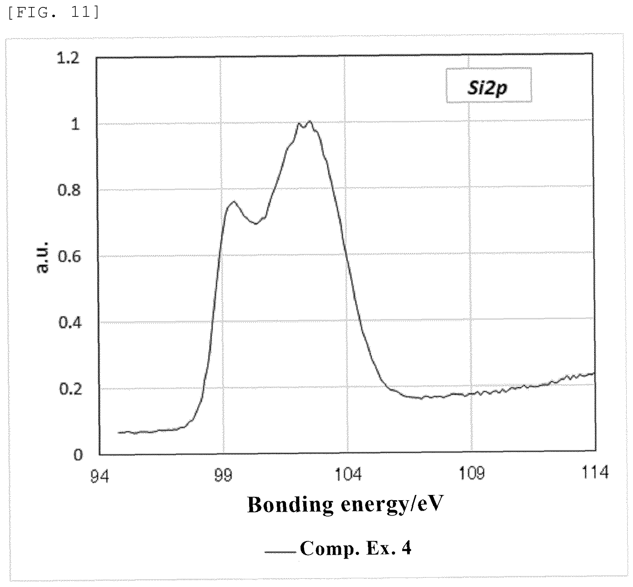

FIG. 8 shows Si2p XPS spectra of the respective negative electrode active material layers of Examples 1 to 3 and Comparative Examples 4 and 5. FIG. 9 shows the spectra of Examples 1 and 2 shown in FIG. 8. FIG. 10 shows the spectra of Example 3 and Comparative Example 5 shown in FIG. 8. FIG. 11 shows the spectrum of Comparative Example 4 shown in FIG. 8.

As will be appreciated from FIG. 11, the spectrum of Comparative Example 4 had distinctively separate peaks, namely a peak around 103 eV assigned to silicon in the tetravalent compound state and a peak around 99 eV assigned to silicon in the zerovalent state.

On the other hand, as shown in FIGS. 8 and 9, the peaks assigned to silicon in the tetravalent compound state and silicon in the zerovalent state were not observed in the spectra of Examples 1 and 2, which rather had broad peaks assigned to silicon in the monovalent to trivalent compound states ($Si^{1+}$ to $Si^{3+}$) culminating between 101.6 eV and 101.8 eV. The negative electrode active material of Example 4 also exhibited a spectrum similar to those of Examples 1 and 2. From these results, silicon present on the surface of the negative electrode active material particles, i.e., at the boundary between the composite compound and the negative electrode active material particles was determined to be in the compound state of $Si^{1+}$ to $Si^{3+}$, as mentioned earlier.

As shown in FIGS. 8 and 10, almost no peaks assigned to silicon in the zerovalent state around 99 eV were observed in the spectrum of Example 3.

(Examples 5 to 11)

In Examples 5 to 11, each negative electrode was produced in the same manner as in Example 1, except that the roughness Rz of the surface-roughened copper foil was varied in the range of 0.5 um to 7 um, as shown in Table 2 below.

(Examples 12 to 15 and Comparative Examples 7 and 8)

In Examples 12 to 15 and Comparative Examples 7 and 8, each negative electrode was produced in the same manner as in Example 1, except that, in order to achieve the oxygen ratio O/Si shown in Table 2 below, the film formation rate was adjusted and the film formation was performed while blowing hydrogen or oxygen into the vapor as necessary.

(Examples 16 to 18)

In Examples 16 to 18, each negative electrode was produced in the same manner as in Example 1, except that the film formation was performed while adjusting the film formation rate, the copper foil moving speed, and the opening in contact with the deposition stream so that the crystallite size originating from the Si (111) crystal plane in the negative electrode active material particles had the values shown in Table 2 below.

The negative electrodes of Examples 5 to 18 and Comparative Examples 7 and 8 were subjected to SEM observation and XPS analysis, in the same manner as in Example 1. The results are summarized in Table 2 below.

The results showed that each of the lithium-inserted negative electrode active material layers obtained in Examples 5 to 18 had negative electrode active material particles containing a compound of lithium, silicon, and oxygen, and a filling layer including a composite compound containing chemically bonded carbon and oxygen atoms, where the filling layer was filled in the interparticle gaps and the surface layer of the negative electrode active material. The results also showed that the ratio O/Si of silicon to oxygen constituting the negative electrode active material particles was 0.8 or more and 1.2 or less.

The results of XPS analysis showed that, in each of the negative electrodes of Examples 5 to 18, the composite compound containing chemically bonded carbon and oxygen atoms contained lithium as part thereof.

[Assembly of Coin Battery for Testing]

Then, ethylene carbonate (EC), and dimethyl carbonate (DMC) were mixed to prepare a non-aqueous solvent, followed by dissolving electrolyte salt (lithium hexafluorophosphate : $LiPF_6$) in the non-aqueous solvent to prepare an electrolyte (non-aqueous electrolyte). In this case, the solvent composition was set to EC : DMC = 30 : 70 by volume, and the content of the electrolyte salt was set to 1 mol/kg relative to the solvent. Fluoroethylene carbonate (FEC) was added in an amount of 2.0 mass% as an additive.

Then, a coin battery for an initial efficiency test was assembled as follows.

First, Li foil with 1 mm in thickness was punched to a diameter of 16 mm, and pasted onto an aluminum clad.

Then, the negative electrode obtained above was punched to a diameter of 15 mm, and disposed oppositely to the Li foil pasted onto the aluminum clad via a separator, the electrolyte liquid was injected, and then a 2032 coin battery was fabricated.

[First Efficiency Measurement]

The initial efficiency was measured under the following condition.

First, the fabricated coin battery for an initial efficiency test was charged (initial charge) at a charge rate corresponding to 0.03 C with a CCCV mode. The CV was set to 0 V, and the termination current was 0.04 mA. Then, the coin battery was CC-discharged (initial discharge) at a discharge rate of 0.03 C, same as above, with the discharge termination voltage of 1.2 V.

To investigate the initial charge-and-discharge characteristics, the first efficiency (hereinafter also referred to as an initial efficiency) was calculated. The first efficiency was calculated from the equation expressed as: first efficiency (%) = (first discharge capacity / first charge capacity) $\times$ 100.

[Lithium Secondary Battery Manufacturing and Battery Evaluation]

Based on the obtained initial data, a counter positive electrode was designed so as to provide a 95% utilization rate of the negative electrode. The utilization rate was calculated from the positive and negative electrode capacities obtained using the counter electrode Li, based on the following equation.

$$\text{Utilization rate} = (\text{positive electrode capacity} - \text{negative electrode loss}) / (\text{negative electrode capacity} - \text{negative electrode loss}) \times 100$$

Based on this design, respective lithium secondary batteries of Examples and Comparative Examples were manufactured. The respective lithium secondary batteries of Examples and Comparative Examples were evaluated.

The cycle characteristics were investigated as follows. First, the batteries were charged and discharged for two cycles at 0.2C under an atmosphere of 25°C for battery stabilization, and the discharge capacity at the second cycle was measured. The battery cycle characteristics were calculated from the discharge capacity at the third cycle, and the battery test was terminated at 100 cycles. Charging and discharging were performed at 0.7 C for charging and 0.5 C for discharging. The charge voltage was 4.3 V, the discharge termination voltage was 2.5 V, and the charge termination rate was 0.07 C.

The discharge capacity at the second cycle measured in the cycle characteristics test was defined as the capacity achieved by each negative electrode.

The cycle characteristics (capacity retention ratio at 100 cycles), the first efficiency, and the capacity increase rate relative to Comparative Example 1 for the respective electrodes of Examples and Comparative Examples are summarized in Tables 1 and 2 below.

[SEM Observation of Negative Electrode Active Material Layer Surface after Charging and Discharging]

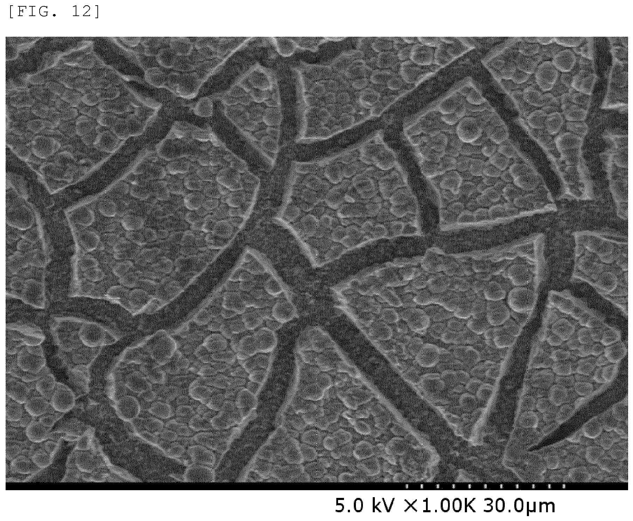

The negative electrode active material layer of the negative electrode of Example 2 after charging and discharging was observed using a scanning electron microscope (SEM). FIG. 12 shows an SEM image of the negative electrode active material layer of the negative electrode of Example 2 after charging and discharging (post-discharge state).

As shown in FIG. 12, in the negative electrode active material layer of the negative electrode of Example 2 in the post-discharge state, smaller particles, namely primary particles, are aggregated to form secondary particles. The secondary particles are separated from each other in an in-plane direction. The visible portion between the secondary particles is a part of the surface of the negative electrode current collector.

SEM observation of the negative electrode active material layers of the negative electrodes of Examples 1 and 3 to 18 after charging and discharging provided SEM images similar to that of FIG. 12.

[XPS Spectrum after Twenty Charge-and-Discharge Cycles]

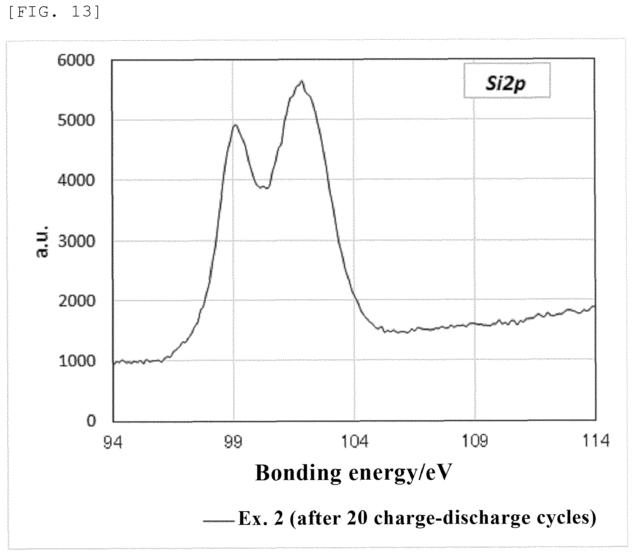

The negative electrode of Example 2 was charged and discharged for twenty cycles and then subjected to XPS analysis. A portion of the obtained XPS spectrum is shown in FIG. 13.

As shown in FIG. 13, the XPS spectrum of the negative electrode active material layer of the negative electrode of Example 2 after twenty charge-and-discharge cycles includes a peak around 99 eV assigned to silicon in the zerovalent state and a broad peak, culminating around 101.9 eV, assigned to silicon in the compound state of $Si^{1+}$ to $Si^{3+}$.

[XRD Analysis of Negative Electrode Active Material Particles]

The negative electrode active material particles contained in the negative electrode active material layer of each negative electrode were analyzed by XRD. From the peak originating from the Si (111) crystal plane, the crystallite size corresponding to the Si (111) crystal plane in the negative electrode active material particles was calculated based on Scherrer's formula. The results are summarized in Tables 1 and 2 below. The negative electrode active material particles of Examples 1 to 15 and Comparative Examples 2 to 8 had amorphous Si.

[Table 1]

| | Capacity retention ratio at 100 Cy (%) | Initial efficiency (%) | Capacity increase rate per volume | Roughness Rz ($\mu$m) | Filling layer (composite compound) | Valence at interface | Si crystallinity | Oxygen ratio O/Si |
|---|---|---|---|---|---|---|---|---|
| Comp.Ex. 1 | 95 | 94.0 | 0.0% | - | - | - | - | - |
| Comp.Ex. 2 | 92 | 90.1 | 28.0% | - | - | - | Amorphous | 1 |
| Comp.Ex. 3 | 41 | 91.0 | 41.0% | 2.5 | Present | Only silicon | Amorphous | 0.1 |
| Comp.Ex. 4 | 71 | 86.0 | 34.0% | 2.5 | Present | Separated into zero- and tetravalent Si in both bulk and surface | Amorphous | 0.75 |
| Comp.Ex. 5 | 89 | 71.0 | 18.0% | 2.5 | Present | No adjustment (same as ordinary silicon oxide) | Amorphous | 1 |
| Ex.1 | 93 | 90.3 | 37.0% | 2.5 | Present | $Si^{1+}$ to $Si^{3+}$ | Amorphous | 1 |
| Ex.2 | 93 | 90.1 | 37.0% | 2.5 | Present | $Si^{1+}$ to $Si^{3+}$ | Amorphous | 1 |
| Ex . 3 | 90 | 89.8 | 37.0% | 2.5 | Present | No adjustment (same as ordinary silicon oxide) | Amorphous | 1 |
| Ex.4 | 94 | 90.4 | 37.5% | 2.5 | Present (increased C state) | $Si^{1+}$ to $Si^{3+}$ | Amorphous | 1 |
| Comp.Ex. 6 | 83 | 87.0 | 37.0% | 2.5 | Absent | $Si^{1+}$ to $Si^{3+}$ | Amorphous | 1 |

[Table 2]

| | Capacity retention ratio at 100 Cy (%) | Initial efficiency (%) | Capacity increase rate per volume | Roughness Rz ($\mu$m) | Filling layer (composite compound) | Valence at interface | Si crystallinity | Oxygen ratio O/Si |
|---|---|---|---|---|---|---|---|---|
| Ex. 5 | 85 | 90.1 | 37.0% | 0.5 | Present | $Si^{1+}$ to $Si^{3+}$ | Amorphous | 1 |
| Ex.6 | 87 | 90.2 | 37.0% | 1 | Present | $Si^{1+}$ to $Si^{3+}$ | Amorphous | 1 |
| Ex.7 | 90 | 90.1 | 37.0% | 1.5 | Present | $Si^{1+}$ to $Si^{3+}$ | Amorphous | 1 |
| Ex.8 | 91 | 90.2 | 37.0% | 2 | Present | $Si^{1+}$ to $Si^{3+}$ | Amorphous | 1 |
| Ex.9 | 93 | 90.2 | 37.0% | 3 | Present | $Si^{1+}$ to $Si^{3+}$ | Amorphous | 1 |
| Ex . 10 | 91 | 90.2 | 37.0% | 5 | Present | $Si^{1+}$ to $Si^{3+}$ | Amorphous | 1 |
| Ex. 11 | 86 | 90.1 | 37.0% | 7 | Present | $Si^{1+}$ to $Si^{3+}$ | Amorphous | 1 |
| Comp.Ex. 7 | 84 | 88.8 | 37.0% | 2.5 | Present | Unadjustable | Amorphous | 0.7 |
| Ex.12 | 87 | 90.3 | 37.0% | 2.5 | Present | $Si^{1+}$ to $Si^{3+}$ | Amorphous | 0.8 |
| Ex. 13 | 90 | 90.2 | 37.0% | 2.5 | Present | $Si^{1+}$ to $Si^{3+}$ | Amorphous | 0.9 |
| Ex.14 | 92 | 90.0 | 37.0% | 2.5 | Present | $Si^{1+}$ to $Si^{3+}$ | Amorphous | 1.1 |
| Ex.15 | 90 | 89.8 | 37.0% | 2.5 | Present | $Si^{1+}$ to $Si^{3+}$ | Amorphous | 1.2 |
| Comp.Ex. 8 | 84 | 89.1 | 37.0% | 2.5 | Present | Unadjustable | Amorphous | 1.3 |
| Ex.16 | 91 | 90.2 | 37.0% | 2.5 | Present | $Si^{1+}$ to $Si^{3+}$ | 1.0 nm | 1 |
| Ex.17 | 89 | 90.1 | 37.0% | 2.5 | Present | $Si^{1+}$ to $Si^{3+}$ | 2.0 nm | 1 |
| Ex.18 | 86 | 90.2 | 37.0% | 2.5 | Present | Unadjustable | 3.0 nm | 1 |

[Results]

In Tables 1 and 2 above, the rate of increase in discharge capacity per volume (Wh/L) relative to Comparative Example 1 is shown as the capacity increase rate.

Apparent from Tables 1 and 2, the negative electrodes of Examples 1 to 18 achieved a significant increase in capacity over the graphite negative electrode of Comparative Example 1 while maintaining the battery characteristics (cycle characteristics and initial efficiency).

On the other hand, the negative electrode of Comparative Example 2, which was produced by using powdered Li-doped SiO, had a lower capacity than the negative electrodes of Examples 1 to 18. This may be due to the facts that the negative electrode of Comparative Example 2 lacked the filling layer with a composite compound containing chemically bonded carbon and hydrogen atoms in the interparticle gaps and surface layer of the negative electrode active material particles and that, due to the usage of powder instead of vapor deposition, the negative electrode of Comparative Example 2 contained a binding agent not involved in charging and discharging and also had many excess voids.

The negative electrode of Comparative Example 3 had much poorer cycle characteristics than Examples 1 to 18. The negative electrode of Comparative Example 4 had lower cycle characteristics and lower first efficiency than Examples 1 to 18. This may be due to the fact that Comparative Examples 3 and 4 were unable to introduce sufficient oxygen into the silicon film and thus had a too low oxygen ratio O/Si.

Comparative Example 5 had a lower capacity increase per volume than Examples 1 to 18. This may be due to the fact that Li insertion into the silicon oxide was not performed in Comparative Example 5.

Comparative Example 6 had poorer cycle characteristics than Examples 1 to 18. This may be due to the fact that the filling layer including the composite compound containing chemically bonded carbon and oxygen atoms was removed in Comparative Example 6.

Examples 5 to 11 shown in Table 2 are examples of adjusting the surface roughness Rz of the roughened copper foil as a negative electrode current collector to find the most suitable point.

The results of Examples 1 and 5 to 11 show that the negative electrodes of Examples 1 and 7 to 10, where the surface roughness Rz of the roughened copper foil was 1.5 um or more and 5.0 um or more, exhibited better cycle characteristics than the negative electrodes of Examples 5 and 6, where the roughness Rz was less than 1.5 um, and Example 11, where the roughness Rz was more than 5.0 um. This may be due to the fact that, by virtue of having the surface roughness Rz of 1.5 um or more and 5.0 um or more, the negative electrodes of Examples 1 and 7 to 10 were able to sufficiently retain the negative electrode active material layer by the roughened portions of the collector surface and inhibit to a greater extent the detachment of the active material during charging and discharging.

Comparative Examples 7 and 8 and Examples 12 to 15 are examples of adjusting the oxygen content (oxygen ratio O/Si) in the bulk.

Since silicon oxide is generated from silicon and silicon dioxide, it is difficult to increase or decrease the oxygen content. In fact, it was impossible to control the valence of silicon oxide with an O/Si ratio of 0.7 (Comparative Example 7), resulting in a significant amount of silicon element remaining.

Low oxygen content requires not only introducing hydrogen into vapor to promote active reduction but also significantly reducing the film formation rate.

The negative electrode of Comparative Example 7, in which the oxygen ratio O/Si was set to 0.7, had lower cycle characteristics than the negative electrodes of Examples 1 and 12 to 15. This may be due to the fact that the negative electrode of Comparative Example 7 had an excessively large reaction area between zerovalent Si and the electrolyte due to the oxygen ratio O/Si being set to 0.7.

On the other hand, in the case of increasing the oxygen content, the film formation rate was reduced too, and oxygen was blown directly into the vapor stream for film formation. However, such increased oxygen content made it difficult to prepare the silicon oxide film.

The negative electrode of Comparative Example 8, in which the oxygen ratio O/Si was set to 1.3, had a lower first efficiency than the negative electrodes of Examples 1 and 12 to 15. This may be due to the fact that the negative electrode of Comparative Example 8 had a too much load material due to the oxygen ratio O/Si being set to 1.3.

Examples 16 to 18 are examples where the effects of silicon crystallization on the battery characteristics were considered.

The negative electrodes of Examples 16 to 18 were able to increase the capacity over the negative electrode of Comparative Example 1 while maintaining the battery characteristics over Comparative Examples 2 to 8.

On the other hand, Example 1, in which the silicon was amorphous, had better battery characteristics than the negative electrodes of Examples 16 to 18, in each of which the silicon was more crystallized.

Incidentally, in Examples 16 to 18, heat treatment was initially performed under vacuum after the film formation, but was abandoned due to severe degradation or alloying of the copper foil. Instead, the crystallinity was controlled by adjusting the film formation rate, the moving speed of the copper foil, and the opening in contact with the deposition stream, as mentioned earlier.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A negative electrode comprising:

   a negative electrode current collector with a roughened surface; and
   a negative electrode active material layer provided on the negative electrode current collector,
   wherein the negative electrode active material layer includes:

   negative electrode active material particles containing a compound of lithium, silicon, and oxygen; and
   a composite compound filled in interparticle gaps and a surface layer of the negative electrode active material particles, the composite compound at least containing chemically bonded carbon and oxygen atoms, the composite compound not being alloyed with the negative electrode active material particles, and

   a ratio O/Si of the oxygen to the silicon constituting the negative electrode active material particles is in a range of 0.8 or more and 1.2 or less.

2. The negative electrode according to claim 1, wherein the composite compound is a ring-opening decomposition product of a composite of an ether-based solvent and a polyphenylene compound or a polycyclic aromatic compound, or a ring-opening decomposition product of the composite complexed with lithium.

3. The negative electrode according to claim 1 or 2, wherein the composite compound contains lithium at least as part thereof.

4. The negative electrode according to any one of claims 1 to 3, wherein, in the negative electrode, the silicon present at a boundary between the composite compound and the negative electrode active material particles is in a compound state of $Si^{1+}$ to $Si^{3+}$.

5. The negative electrode according to any one of claims 1 to 4, wherein the negative electrode active material layer has a multilayer structure of two or more layers, and a gap between the layers is filled with the composite compound.

6. The negative electrode according to any one of claims 1 to 5, wherein the composite compound has a plurality of bonding states with different C1s bonding energies as analyzed by photoelectron spectroscopy.

7. The negative electrode according to any one of claims 1 to 6, wherein the negative electrode active material particles after at least twenty charge-and-discharge cycles include silicon in an $Si^{0+}$ state and silicon in a compound state of $Si^{1+}$ to $Si^{3+}$.

8. The negative electrode according to any one of claims 1 to 7, wherein, when the negative electrode active material particles are defined as primary particles, the negative electrode active material layer after charging and discharging forms secondary particles that are an aggregate of the primary particles, and the secondary particles are in the form of being separated from each other in an in-plane direction.

9. The negative electrode according to any one of claims 1 to 8, wherein the negative electrode active material particles before charging and discharging have a peak originating from an Si (111) crystal plane obtained by X-ray diffraction using Cu-K$\alpha$ rays, and a size of crystallites corresponding to the crystal plane is 1.0 nm or less.

10. The negative electrode according to any one of claims 1 to 9, wherein the negative electrode current collector has a ten-point average roughness Rz of 1.5 um or more and 5.0 um or less on the surface.

11. A negative electrode manufacturing method for manufacturing the negative electrode according to any one of claims 1 to 11, comprising steps of:

vapor-depositing a negative electrode active material layer containing silicon oxide on the negative electrode current collector; and

immersing the negative electrode active material layer in a solution containing lithium to modify the silicon oxide into the compound of lithium, silicon, and oxygen by redox method and form the composite compound.

[FIG. 1]

[FIG. 2]

5.0 kV × 5.00K 6.00μm

[FIG. 3]

[FIG. 4]

5.0 kV × 20.0K 1.50µm

[FIG. 5]

5.0 kV ×20.0 K  1.50μm

[FIG. 6]

5.0 kV ×10.0K 3.00μm

[FIG. 7]

C1s

Bonding energy/eV

—— Ex. 2        ----- Ex. 4

[FIG. 8]

[FIG. 9]

[FIG. 10]

[FIG. 11]

[FIG. 12]

5.0 kV ×1.00K 30.0μm

[FIG. 13]

Bonding energy/eV

—— Ex. 2 (after 20 charge-discharge cycles)

EP 4 290 607 A1

# INTERNATIONAL SEARCH REPORT

International application No.

**PCT/JP2021/047263**

## A. CLASSIFICATION OF SUBJECT MATTER

*H01M 4/136*(2010.01)i; *H01M 4/1397*(2010.01)i; *H01M 4/36*(2006.01)i; *H01M 4/38*(2006.01)i; *H01M 4/48*(2010.01)i; *H01M 4/58*(2010.01)i; *H01M 4/66*(2006.01)i
FI: H01M4/136; H01M4/58; H01M4/48; H01M4/38 Z; H01M4/36 C; H01M4/36 A; H01M4/66 A; H01M4/1397

According to International Patent Classification (IPC) or to both national classification and IPC

## B. FIELDS SEARCHED

Minimum documentation searched (classification system followed by classification symbols)
H01M4/136; H01M4/1397; H01M4/36; H01M4/38; H01M4/48; H01M4/58; H01M4/66

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2017-152375 A (SHINETSU CHEMICAL CO, MITSUI CHEMICALS INC) 31 August 2017 (2017-08-31) claims 20-25, 33, 36, paragraphs [0092]-[0134], [0162]-[0210] | 1-3, 6 |
| Y | | 10 |
| A | | 4-5, 7-9, 11 |
| Y | JP 2010-103006 A (SONY CORP) 06 May 2010 (2010-05-06) claims 6, 8, paragraphs [0017], [0025], [0042], [0189]-[0193] | 10 |
| A | JP 2005-183264 A (NEC CORP) 07 July 2005 (2005-07-07) | 1-11 |
| A | JP 2018-6190 A (SHINETSU CHEMICAL CO) 11 January 2018 (2018-01-11) | 1-11 |
| A | JP 2002-313319 A (SANYO ELECTRIC CO LTD) 25 October 2002 (2002-10-25) | 1-11 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 February 2022** | **08 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/047263** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111056555 A (JIANGXI YIJIN NEW ENERGY TECHNOLOGY CO., LTD..) 24 April 2020 (2020-04-24) | 1-11 |

Form PCT/ISA/210 (second sheet) (January 2015)

INTERNATIONAL SEARCH REPORT
Information on patent family members

International application No.

**PCT/JP2021/047263**

| Patent document<br>cited in search report | | | Publication date<br>(day/month/year) | Patent family member(s) | | Publication date<br>(day/month/year) |
|---|---|---|---|---|---|---|
| JP | 2017-152375 | A | 31 August 2017 | US 2019/0051897 A1<br>claims 20-25, 34, 36,<br>paragraphs [0059]-[0106],<br>[0135]-[0175]<br>WO 2017/145853 A1<br>EP 3407409 A1<br>CN 108718535 A<br>KR 10-2018-0117106 A | | |
| JP | 2010-103006 | A | 06 May 2010 | US 2010/0104951 A1<br>claims 6, 8, paragraphs [0030],<br>[0038], [0055], [0190]-[0193]<br>KR 10-2010-0045928 A<br>CN 101728537 A | | |
| JP | 2005-183264 | A | 07 July 2005 | (Family: none) | | |
| JP | 2018-6190 | A | 11 January 2018 | US 2019/0123353 A1<br><br>WO 2018/008260 A1<br><br>EP 3480872 A1<br><br>CN 109155406 A<br><br>KR 10-2019-0024906 A | | |
| JP | 2002-313319 | A | 25 October 2002 | US 2004/0224231 A1 | | |
| CN | 111056555 | A | 24 April 2020 | (Family: none) | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A

- JP 2008177346 A
- JP 2007234255 A
- JP 2009212074 A
- JP 2009205950 A
- JP H06325765 A
- JP 2015156355 A

**Non-patent literature cited in the description**

- Denchi (battery). *Battery Association of Japan, Newsletter,* 01 May 2010, 10
- **A. HOHL ; T. WIEDER ; P. A. VAN AKEN ; T. E. WEIRICH ; G. DENNINGER ; M. VIDAL ; S. OSWALD ; C. DENEKE ; J. MAYER ; H. FUESS.** *J. Non-Cryst. Solids,* 2003, vol. 320, 255
- **V. KAPAKLIS.** *J. Non-Crystalline Solids,* 2008, vol. 354, 612
- **MARIKO MIYACHI ; HIRONORI YAMAMOTO ; HIDEMASA KAWAI.** *J. Electrochem. Soc.,* 2007, vol. 154 (4), A376-A380
- **M. YAMADA ; M. INABA ; A. UEDA ; K. MATSUMOTO ; T. IWASAKI ; T. OHZUKU.** *J. Electrochem. Soc.,* 2012, vol. 159, A1630

- **TAEAHN KIM ; SANGJIN PARK ; SEUNG M. OH.** *J. Electrochem. Soc.,* 2007, vol. 154, A1112-A1117
- **HYE JIN KIM ; SUNGHUN CHOI ; SEUNG JONG LEE ; MYUNG WON SEO ; JAE GOO LEE ; ERHAN DENIZ ; YONG JU LEE ; EUN KYUNG KIM ; JANG WOOK CHOI.** *Nano Lett.,* 2016, vol. 16, 282-288
- The Latest Development Trends on Lithium-ion Batteries for xEV. CMC Publishing, 27 November 2020, 96-111